# EUROPÄISCHE PATENTSCHRIFT

(11) **EP 1 536 180 B1**
(45) Veröffentlichungstag und Bekanntmachung des Hinweises auf die Patenterteilung: **12.12.2007**
(21) Anmeldenummer: 04023483.3
(22) Anmeldetag: 01.10.2004
(51) Int. Cl.: F23Q 7/00, H05B 3/14

(54) **Verfahren zum Herstellen eines Glühstiftes für eine keramische Glühkerze**
Method for manufacturing an glow stab for a glow plug
Procédé de fabrication d'un élément-crayon incandescent d'une bougie à incandescence

(30) Priorität: 19.11.2003 DE 10353973
(43) Veröffentlichungstag der Anmeldung: 01.06.2005
(73) Patentinhaber: Beru AG, 71636 Ludwigsburg (DE)
(72) Erfinder: Göb, Oliver, 71672 Marbach (DE); Houben, Hans, 52146 Würselen (DE); Frassek, Lutz, 96472 Rödental (DE); von Watzdorf, Henning, 71642 Ludwigsburg (DE); Allgaier, Martin, 71634 Ludwigsburg (DE)
(74) Vertreter: Pohlmann, Eckart

(56) Entgegenhaltungen:
- EP-A- 0 262 833
- EP-A- 0 918 195
- DE-A1- 2 829 028
- DE-A1- 10 029 004
- DE-A1- 19 908 764
- GB-A- 927 336
- PATENT ABSTRACTS OF JAPAN Bd. 015, Nr. 065 (M-1082), 15. Februar 1991 (1991-02-15) & JP 02 292172 A (MATSUSHITA ELECTRIC IND CO LTD), 3. Dezember 1990 (1990-12-03)

## Beschreibung

Die Erfindung betrifft ein Verfahren zum Herstellen eines Glühstiftes für eine keramische Glühkerze, nach dem Gattungsbegriff des Patentanspruchs 1.

Ein derartiges Verfahren ist aus der GB 927 336 A bekannt.

Ein Glühstift bzw. eine Glühkerze mit dem oben beschriebenen Aufbau ist im Übrigen aus der US 6 309 859 B1 oder der DE 100 53 372 A1 bekannt.

Mit den bisher üblichen Formgebungsverfahren zur Herstellung eines derartigen Glühstiftes wie dem Trockenpressen, dem Spritzguss und dem Schlickerguss lassen sich die für die Funktionalität notwendigen dünnen Schichten nur mit großem Aufwand realisieren. Dem Formgebungsprozess ist außerdem noch ein kostenintensiver Sinterprozess nachgeschaltet.

Die der Erfindung zugrunde liegende Aufgabe besteht daher darin, ein Verfahren der eingangs genannten Art anzugeben, mit dem ein Glühstift kostengünstig gefertigt werden kann.

Diese Aufgabe wird gemäß der Erfindung durch das Verfahren gelöst, das im Patentanspruch 1 angegeben ist.

Besonders bevorzugte Ausgestaltungen und Weiterbildungen des erfindungsgemäßen Verfahrens sind Gegenstand der Ansprüche 2 bis 9.

Im Folgenden werden anhand der zugehörigen Zeichnungen besonders bevorzugte Ausführungsbeispiele des erfindungsgemäßen Verfahrens näher beschrieben.

Es zeigen
Fig. 1 eine schematische Schnittansicht eines Glühstiftes für eine keramische Glühkerze,
Fig. 2 in einer schematischen Schnittansicht den Verfahrensschritt des thermischen Spritzens einer Außenschicht und
Fig. 3 in einer schematischen Schnittansicht den Verfahrensschritt der Endbearbeitung des Glühstiftes.

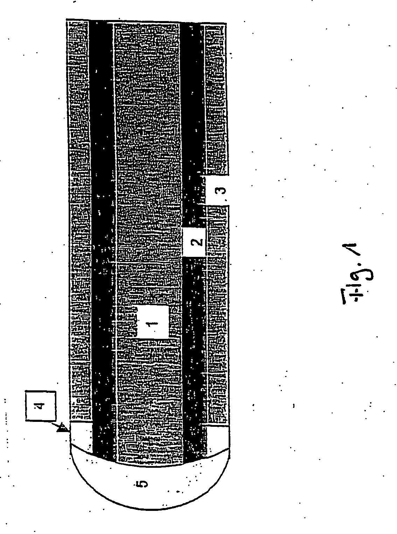

In Fig. 1 ist in einer Schnittansicht ein Glühstift für eine keramische Glühkerze dargestellt, der einen elektrisch leitenden Innenzylinder 1, eine koaxial zum Innenzylinder 1 an dessen Zylinderaußenfläche vorgesehene Isolierschicht 2, eine koaxial dazu vorgesehene leitfähige Schicht 3 und Heizschichten 4 und 5 aufweist, die als koaxiale Schicht 4 und senkrecht zur Glühstiftachse verlaufende Schicht 5 am Ende der Anordnung aus Innenzylinder 1 und Schichten 2, 3 ausgebildet sind.

Der Innenzylinder 1 wird beispielsweise durch uniaxiales Trockenpressen gegebenenfalls mit kaltisostatischer Nachverdichtung, durch Extrudieren oder durch Pulverspritzguss gebildet. Der Innenzylinder wird anschließend entbindert und vorgesintert bzw. dichtgesintert, um ihm eine ausreichende Festigkeit für die nachfolgenden Arbeitsvorgänge zu geben.

Nach einer Kalibrierung des Durchmessers und dem Längen des Innenzylinders wird dieser durch ein spanabhebendes Verfahren oder Wasserstrahlen an einem Ende verjüngt und an einem anderen Ende mit einer Kontaktierungsbohrung versehen. Diese Arbeitsvorgänge können vor dem Entbindern und Vorsintern oder nach dem Entbindern und Vorsintern durch Weißbearbeitung mittels Diamantwerkzeug durchgeführt werden.

Die äußeren Schichten werden anschließend durch thermisches Spritzen auf den Innenzylinder 1 aufgebracht.

Bei einem weiteren Ausführungsbeispiel werden der leitende Innenzylinder 1 und die Isolierschicht 2 durch das oben beschriebene Formgebungsverfahren hergestellt und werden die leitfähige Schicht 3 und die zur Glühstiftachse senkrecht verlaufende Schicht 5 und ggf. die koaxiale Schicht 4, die darauf ausgebildet werden, thermisch gespritzt.

Es ist weiterhin auch möglich, den leitenden Innenzylinder 1, die Isolierschicht 2 und die leitfähige Schicht 3 durch das beschriebene Formgebungsverfahren herzustellen und nur die senkrecht zur Glühstiftachse verlaufende Schicht 5 und ggf. die koaxiale Schicht 4 durch thermisches Spritzen zu bilden.

Das thermische Spritzen erfolgt vorzugsweise nach dem Vorsintern bzw. Sintern der Bauteile. Als thermisches Spritzverfahren eignen sich insbesondere das atmosphärische Plasmaspritzen (APS), das Vakuumplasmaspritzen (VPS) und das Hochgeschwindigkeitsflammspritzen (HVOF).

Zur Vermeidung von thermischen Spannungen beim Aufbringen der Schichten wird dazu der Rohling beim Spritzen erwärmt. Falls die Oberflächenrauigkeit des Rohlings für eine ausreichende Haftung der aufzuspritzenden Schicht nicht ausreicht, wird die Oberfläche vor dem Beschichten mechanisch oder durch ein anderes Verfahren aufgeraut. Es kann auch ein Haftvermittler aufgespritzt werden, der auch dazu dienen kann, die thermischen Ausdehnungskoeffizienten der Materialien des Innenzylinders 1 und der einzelnen Schichten 2, 3, 4, 5 aneinander anzupassen.

Zusätzlich kann nach dem Aufspritzen eine Hartbearbeitung, z. B. ein Anphasen des stiftförmigen Rohlings erfolgen. Darüber hinaus kann durch die Hartbearbeitung eine bessere Abstufung der einzelnen Funktionsschichten zur Vermeidung von Hot-Spots erreicht werden.

Auf die äußere Schicht 3 kann eine Isolationsschicht gleichfalls thermisch aufgespritzt werden, so dass dieser Aufbau den Einsatz einer Glühkerze mit einem derartigen keramischen Glühstift als Ionenstrommesskerze ermöglicht.

Die elektrischen Funktionsschichten können auf einen vorgesinterten Grundzylinder thermisch gespritzt werden, wobei in diesem Fall die endgültige Verdichtung erst in einem nachgeschalteten Gasdrucksinterprozess erfolgt.

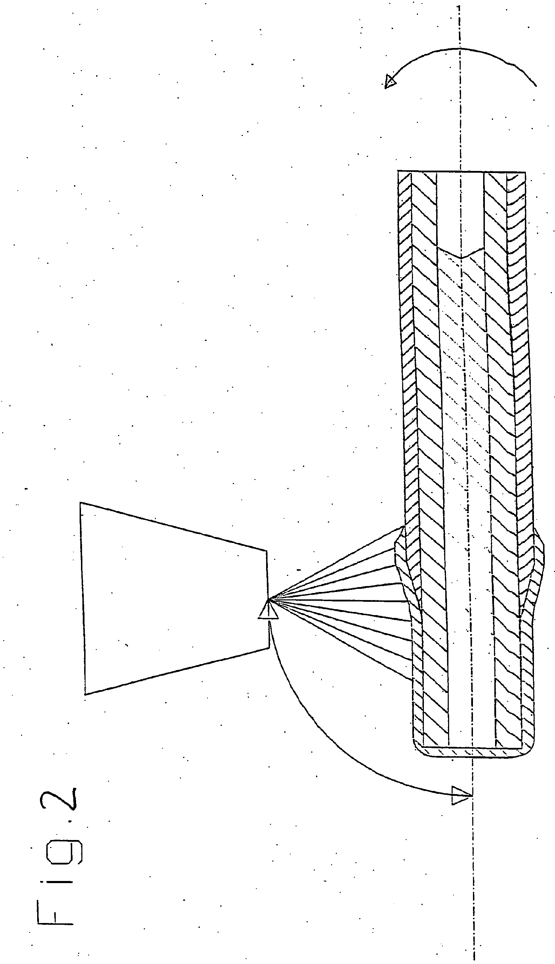

Wie es in Fig. 2 dargestellt ist, werden somit die keramischen Funktionsschichten mittels eines Verfahrens des thermischen Spritzens auf den gesinterten Rohzylinder aufgebracht. Die Schichtstruktur ist dabei rotationssymmetrisch und wird durch einen Außenpol und einen Innenpol kontaktiert.

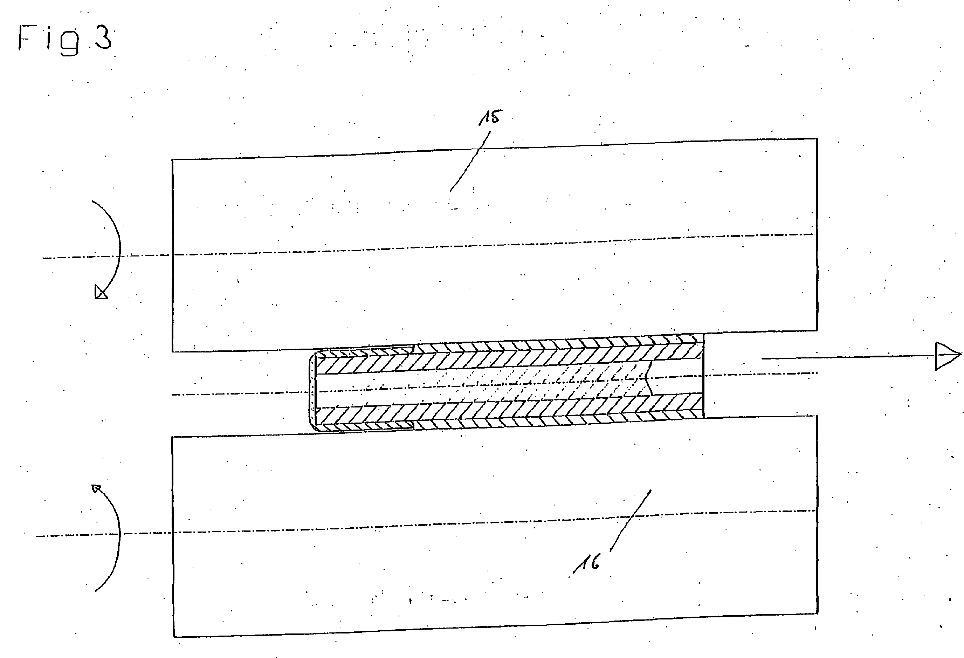

Die Hartbearbeitung des Glühstiftes kann nach dem Vorsintern bzw. Sintern oder nach dem thermischen Spritzen beispielsweise durch ein einfaches und kostengünstiges Durchschubschleifverfahren erfolgen, wie es in Fig. 3 dargestellt ist. Der Glühstift wird dabei auf seine Endgeometrie geschliffen, was mittels einer Andruckrolle 15 und einer Schleifscheibe 16 erfolgt. Die Bewegungs- und Drehrichtung der Werkzeuge und des zu bearbeitenden Glühstiftes sind in Fig. 3 durch Pfeile wiedergegeben.

Als Werkstoff für den Innenzylinder 1 sowie die Schichten 2 bis 5 eignen sich insbesondere silicidische, karbidische, nitridische oder boridische Materialien. Als Sinteradditive können beispielsweise Oxide wie Al₂O₃ und Y₂O₃ und allgemein Oxide der Seltenerdmetalle verwandt werden.

Beim Spritzen kann das thermische Spritzpulver sowohl als eine reine Pulvermischung als auch als bereits gesintertes Granulat vorliegen. Die für das thermische Spritzen notwendige Schmelzphase kann auch durch Zugabe von schmelzbaren halbleitenden bzw. metallischen Komponenten wie Silizium erzeugt werden. Bei einem weiteren Ausführungsbeispiel wird ein mit einer schmelzbaren Phase beschichtetes Pulver zum thermischen Spritzen verwendet.

## Patentansprüche

1. Verfahren zum Herstellen eines Glühstiftes für eine keramische Glühkerze, der aus einem Innenzylinder(1), einer Isolierschicht (2), einer elektrisch leitfähigen, zur Glühstiftachse koaxialen Außenschicht (3) und einer zur Glühstiftachse senkrecht verlaufenden Schicht (5) aufgebaut ist, **dadurch gekennzeichnet, dass** der Innenzylinder (1), die Isolierschicht (2), die elektrisch leitfähige, zur Glühstiftachse koaxialer Außenschicht (3) und die zur Glühstiftachse senkrecht verlaufende Schicht (5) aus silicidischen, karbidischen, nitridischen oder boridischen Materialen gefertigt werden und die Isolierschicht (2) und/oder die zur Glühstiftachse senkrecht verlaufende Schicht (5) durch thermisches Spritzen gebildet wird/werden.

2. Verfahren nach Anspruch 1, **dadurch gekennzeichnet, dass** die zur Glühstiftachse koaxiale Außenschicht (3) durch thermisches Spritzen gebildet wird.

3. Verfahren nach Anspruch 1 oder 2, **dadurch gekennzeichnet, dass** eine weitere zur Glühstiftachse koaxiale Schicht (4) gebildet wird.

4. Verfahren nach Anspruch 3, **dadurch gekennzeichnet, dass** die weitere zur Glühstiftachse koaxiale Schicht (4) aus silicidischen, karbidischen, nitridischen oder boridischen Materialien gefertigt wird.

5. Verfahren nach Anspruch 3 oder 4, **dadurch gekennzeichnet, dass** die weitere zur Glühstiftachse koaxiale Schicht (4) durch thermisches Spritzen gebildet wird.

6. Verfahren nach einem der vorhergehenden Ansprüche, **dadurch gekennzeichnet, dass** die weitere zur Glühstiftachse koaxiale Schicht (4) und/oder die zur Glühstiftachse senkrecht verlaufende Schicht (5) als Heizschichten ausgebildet werden.

7. Verfahren nach einem der vorhergehenden Ansprüche, **dadurch gekennzeichnet, dass** die thermischen Ausdehnungskoeffizienten des Werkstoffes des Innenzylinders (1) und der Schichten (2, 3, 4, 5) dadurch aneinander angepasst werden, dass Zwischenschichten mit entsprechenden Ausdehnungskoeffizienten thermisch aufgespritzt werden.

8. Verfahren nach einem der Ansprüche 1 bis 6, **dadurch gekennzeichnet, dass** die Oberfläche, auf die eine Schicht (2, 3, 4, 5) gespritzt wird, vor dem Spritzen aufgeraut wird.

9. Verfahren nach einem der vorhergehenden Ansprüche, **dadurch gekennzeichnet, dass** der Innenzylinder(1) vorgesintert wird und die Endverdichtung nach dem thermischen Spritzen durch Gasdrucksintern erfolgt.

## Claims

1. Method for producing a glow pin for a ceramic glow plug, which pin is composed of an inner cylinder.(1), an insulating layer (2), an electrically conductive outer layer (3) which is coaxial with the glow pin axis, and a layer (5) extending perpendicularly to the glow pin axis, **characterised in that** the inner cylinder (1), the insulating layer (2), the electrically conductive outer layer (3) which is coaxial with the glow pin axis, and the layer (5) extending perpendicularly to the glow pin axis are made of silicidic, carbidic, nitridic or boridic materials and the insulating layer (2) and/or the layer (5) extending perpendicularly to the glow pin axis are/is formed by thermal spraying.

2. Method according to Claim 1, **characterised in that** the outer layer (3) which is coaxial with the glow pin axis is formed by thermal spraying.

3. Method according to Claim 1 or 2, **characterised in that** a further layer (4) which is coaxial with the glow pin axis is formed.

4. Method according to Claim 3, **characterised in that** the further layer (4) which is coaxial with the glow pin axis is made of silicidic, carbidic, nitridic or boridic materials.

5. Method according to Claim 3 or 4, **characterised in that** the further layer (4) which is coaxial with the glow pin axis is formed by thermal spraying.

6. Method according to any one of the preceding Claims, **characterised in that** the further layer (4) which is coaxial with the glow pin axis and/or the layer (5) extending perpendicularly to the glow pin axis are/is formed as (a) heating layer(s).

7. Method according to any one of the preceding Claims, **characterised in that** the coefficients of thermal expansion of the material of the inner cylinder (1) and of the layers (2, 3, 4, 5) are adapted to one another by thermally spraying on intermediate layers with corresponding coefficients of expansion.

8. Method according to any one of Claims 1 to 6, **characterised in that** the surface onto which a layer (2, 3, 4, 5) is sprayed is roughened before spraying.

9. Method according to any one of the preceding Claims, **characterised in that** the inner cylinder (1) is presintered and final compaction takes place after thermal spraying by gas pressure sintering.

## Revendications

1. Procédé de fabrication d'un élément crayon à incandescence pour une bougie de préchauffage en céramique, l'élément étant construit d'un cylindre intérieur (1), d'une couche isolante (2), d'une couche extérieure électriquement conductrice (3), coaxiale à l'axe de l'élément crayon, et d'une couche (5) s'étendant perpendiculairement à l'axe de l'élément crayon,
**caractérisé en ce que** le cylindre intérieur (1), la couche isolante (2), la couche extérieure électriquement conductrice (3), coaxiale à l'axe de l'élément crayon, et la couche (5) s'étendant perpendiculairement à l'axe de l'élément crayon sont réalisées à partir de matériaux à base de siliciure, de carbure, de nitrure ou de borure, et que la couche isolante (2) et/ou la couche (5) s'étendant perpendiculairement à l'axe de l'élément crayon est/sont produüe(s) par projection thermique.

2. Procédé selon la revendication 1, **caractérisé en ce que** la couche extérieure (3) coaxiale à l'axe de l'élément crayon est produite par projection thermique.

3. Procédé selon la revendication 1 ou 2, **caractérisé en ce qu'**une couche supplémentaire (4) coaxiale à l'axe de l'élément crayon est produite.

4. Procédé selon la revendication 3, **caractérisé en ce que** l'autre couche (4) coaxiale à l'axe de l'élément crayon est réalisée à partir de matériaux à base de siliciure, de carbure, de nitrure ou de borure.

5. Procédé selon la revendication 3 ou 4, **caractérisé en ce que** l'autre couche (4) coaxiale à l'axe de l'élément crayon est produite par projection thermique.

6. Procédé selon l'une des revendications précédentes, **caractérisé en ce que** l'autre couche (4) coaxiale à l'axe de l'élément crayon et/ou la couche (5) s'étendant perpendiculairement à l'axe de l'élément crayon sont réalisées en tant que couches chauffantes.

7. Procédé selon l'une des revendications précédentes, **caractérisé en ce que** les coefficients de dilatation thermique de la matière du cylindre intérieur (1) et des couches (2, 3, 4, 5) sont adaptés l'un à l'autre grâce au fait que des couches intermédiaires avec un coefficient de dilatation thermique correspondant sont appliquées par projection thermique.

8. Procédé selon l'une des revendications 1 à 6, **caractérisé en ce que** la surface sur laquelle est projetée une couche (2, 3, 4, 5) est rendue plus rugueuse avant la projection.

9. Procédé selon l'une des revendications précédentes, **caractérisé en ce que** le cylindre intérieur (1) est préfritté, et que le frittage à densité maximale s'effectue après la projection thermique, par frittage sous pression gazeuse.
